# EUROPÄISCHE PATENTSCHRIFT

(11) **EP 0 866 992 B1**
(45) Veröffentlichungstag und Bekanntmachung des Hinweises auf die Patenterteilung: **26.01.2000**
(21) Anmeldenummer: 96945886.8
(22) Anmeldetag: 19.11.1996
(51) Int. Cl.: G02B 6/44

(54) **Optisches Übertragungselement mit Füllmasse und Verfahren zu dessen Herstellung**
Optical transmission component comprising a filler compound and process for its production
Element de transmission optique comprenant de la matière de remplissage et son procédé de fabrication

(30) Priorität: 11.12.1995 DE 19546170
(43) Veröffentlichungstag der Anmeldung: 30.09.1998
(73) Patentinhaber: SIEMENS AKTIENGESELLSCHAFT, 80333 München (DE)
(72) Erfinder: KAMPS, Rainer, D-96271 Grub (DE); KNOCH, Kerstin, D-96465 Neustadt (DE)
(86) Internationale Anmeldenummer: DE9602205
(87) Internationale Veröffentlichungsnummer: WO9722028

(56) Entgegenhaltungen:
- WO-A-86/05502
- WO-A-94/27174
- DE-A- 2 155 655
- DE-A- 2 728 642
- GB-A- 2 205 972
- US-A- 4 342 500
- US-A- 4 757 100

## Beschreibung

Die Erfindung betrifft ein optisches Übertragungselement, insbesondere eine optische Ader oder ein optisches Kabel, welches mindestens einen Lichtwellenleiter und eine mindestens einen Weichmacher enthaltende Füllmasse (Ader- und/oder Seelenfüllmasse) aufweist.

Die WO/A1-94 27 174 beschreibt eine Füllmasse für optische Adern. Neben Weichmachern enthält die bekannte Füllmasse noch Thixotropierungsmittel und/oder Kügelchen (insbesondere Hohlkügelchen) und/oder Verdickungsmittel als Zusatzstoffe. Als Verdickungsmittel werden bevorzugt Kohlenwasserstoff-Polymere verwendet. Die Verdickungsmittel werden so eingesetzt, daß sie einem Austropfen der Füllmasse insbesondere bei hohen Temperaturen möglichst weitgehend entgegenwirken.

Aus der US-PS 4,342,500 ist ein hochspannungsfestes optisches Kabel bekannt. Wenn ein derartiges Kabel allein mit vernetzten synthetischen Materialien (z.B. Polyurethan, Epoxidharz, Polyesterharz) gefüllt wird, dann sind Luftspalte unvermeidlich. Diese führen im Bereich von Hochspannungsanlagen wegen der möglichen hohen Feldstärkekonzentrationen zu Schwierigkeiten. Aus diesem Grund werden die Kunststoffmaterialien angeweicht durch den Zusatz von entsprechenden Weichmachern, weil dadurch vermieden werden kann, daß sich solche unerwünschten Hohlräume bilden.

Aus der DE-OS 27 28 642 ist ein längswasserdichtes Lichtwellenleiter-Kabel bekannt, bei dem eine unpolare Füllmasse aus gequollenem Polystyrol mit Öl oder thermoplastischer Polyurethankautschuk als Aderfüllmasse verwendet ist. Das Anquellen des Polystyrols wird durch das dort verwendete Öl bewirkt.

Die WO 86/05502 beschreibt ein Polyurethangel, welches nachträglich in ein beschädigtes, also bereits verlegtes elektrisches Kabel zu Reparaturzwecken eingebracht werden kann. Das verwendete Polyurethangel enthält nur 10 bis 90 Gew%. Weichmacher. Weiterhin ist vorgesehen, das Polyurethangel zum Vergießen bei einem Spleiß oder einer Verbindungsstelle zwischen zwei Kabeln einzusetzen. Dieser spezielle Anwendungsfall ist auch bei Glasfaserspleissen möglich.

Aus DE-A-21 55 655 sind allgemein faserverstärkte Kunststoffmassen oder Überzugsmassen bekannt, die beispielsweise für Filme, Folien, gegossene Produkte, mehrschichtige Platten oder mit Glasfasern verstärkte Verbundkörper einsetzbar sind. Die beigefügten Weichmacher sollen höchstens 60 Gew%. betragen.

Der Erfindung liegt die Aufgabe zugrunde, ein optisches Übertragungselement zu schaffen, dessen leicht und preiswert herzustellende Füllmasse die gewünschte Austropfsicherheit in einfacher Weise gewährleistet. Diese Aufgabe wird bei einem optischen Übertragungselement der eingangs genannten Art dadurch gelöst, daß der Anteil des Weichmachers an der Füllmasse zwischen 99 Gew.% und 92 Gew.% beträgt und daß der Füllmasse mindestens ein Zusatzstoff beigefügt ist, welcher vom Weichmacher angelöst und/oder gelöst wird.

Durch die Einwirkung des Weichmachers auf den Zusatzstoff wird letzterer so verändert, daß er eine gelartige Struktur erhält und sich so einen besonders guter und wirkungsvoller Verdickungseffekt einstellt. Dadurch ergeben bereits relativ geringe Mengen an Zusatzstoffen eine hohe Sicherheit gegen Austropfen der Füllmasse. Je nach Dosierung kann es dabei zu einem Anlösen (=Aufquellen oder Anquellen) des Zusatzstoffes kommen oder zu einem vollständigen Auflösen desselben.

Die Erfindung betrifft weiterhin ein Verfahren zur Herstellung eines optischen Übertragungselementes gemäß der Erfindung. Dieses Verfahren ist dadurch gekennzeichnet, daß eine Grundfüllmasse im Bereich der Fertigung des optischen Übertragungselementes (optische Ader, optisches Kabel) mit dem Zusatzstoff zusammengebracht wird und daß die so erhaltene, nunmehr fertige Füllmasse (Aderfüllmasse, Seelenfüllmasse) in einem durchgehenden Prozeß in das jeweilige optische Übertragungselement eingefüllt wird. Die Grundfüllmasse enthält hierbei alle sonstigen, für die Füllmasse vorgesehenen Bestandteile. Die fertige Füllmasse wird somit lediglich durch Beigabe des Zusatzstoffes hergestellt. Dies hat den Vorteil, daß man die austropfsichere Masse nicht auf Vorrat halten muß, sondern sie erst bei Bedarf fertig anmischen kann.

Die Erfindung und ihre Weiterbildungen werden nachfolgend anhand von Zeichnungen näher erläutert.

Es zeigen:
- Figur 1: den schematischen Aufbau einer sogenannten Hohlader mit einem innerhalb einer Schutzhülle angeordneten und in eine Füllmasse eingebetteten Lichtwellenleiter,
- Figur 2: ein Ausführungsbeispiel eines optischen Kabels im Querschnitt und
- Figur 3: eine Vorrichtung zur Füllung eines optischen Übertragungselementes mit einer Füllmasse in schematischer Darstellung.

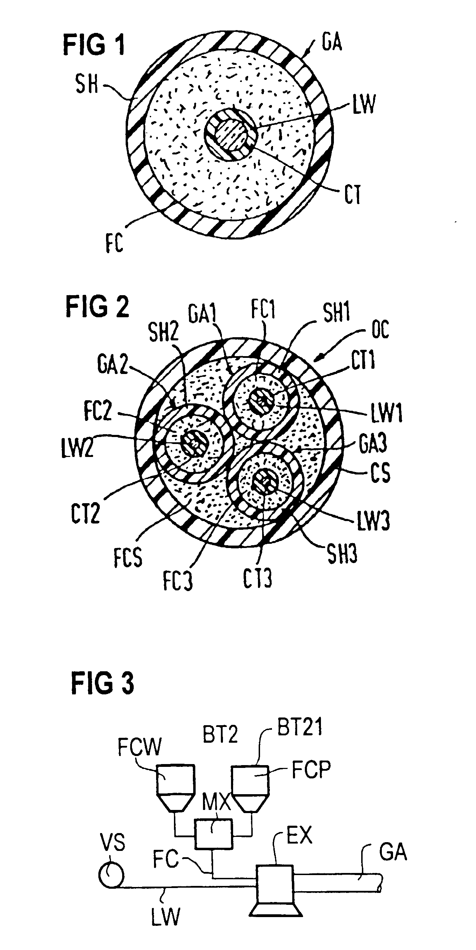

In Figur 1 ist eine sogenannte Hohlader GA (Lichtwellenleiterader) dargestellt, bei der innerhalb einer Schutzhülle SH aus Kunststoff und/oder Metall mindestens ein Lichtwellenleiter LW angeordnet ist, der außen von einer dicht aufsitzenden Schutzschicht (Coating) CT umgeben ist. Zur weichen Einbettung dieses Lichtwellenleiters ist eine Füllmasse FC vorgesehen, die den Lichtwellenleiter LW allseitig umgibt. Diese Füllmasse enthält mindestens einen Anteil in Form eines Weichmachers sowie einen Zusatzstoff, der mit dem Weichmacher in Wechselwirkung tritt und von diesem angelöst bzw. gelöst wird. Infolge der günstigen Eigenschaften der so hergestellten Füllmasse ist diese in einem weiten Temperaturbereich einsetzbar und doch - zum Schutz des Lichtwellenleiters LW - ausreichend weich und zugleich hinreichend gegen Austropfen gesichert.

In Figur 2 ist ein optisches Kabel OC dargestellt, das drei Lichtwellenleiteradern GA1, GA2 und GA3 enthält, deren Aufbau der Struktur nach Figur 1 entspricht. Sie enthalten jeweils mindestens einen Lichtwellenleiter LW1, LW2 und LW3, der mit einer entsprechenden Schutzschicht (Coating CT1, CT2, CT3) umgeben ist. Weiterhin ist jeweils innerhalb der zugehörigen Schutzhülle SH1 bis SH3 eine Füllmasse FC1 bis FC3 vorgesehen, die einen Weichmacher sowie einen Zusatzstoff aufweist, der mit dem Weichmacher in Wechselwirkung tritt und von diesem angelöst bzw. gelöst wird. Die äußeren Zwickelräume der zweckmäßig miteinander verseilten Lichtwellenleiteradern GA1 bis GA3 sind vorteilhaft mit einer Seelenfüllmasse FCS gefüllt, die den gesamten Innenraum bis zur Innenwand des Kabelmantels CS vollständig ausfüllt. Auf diese Weise entsteht ein längswasserdichtes optisches Lichtwellenleiterkabel OC, das einen optimalen mechanischen Schutz sowohl der Lichtwellenleiteradern GA1 bis GA3 als auch der in ihnen enthaltenen Lichtwellenleiter LW1 bis LW3 bietet.

Es ist auch möglich, daß das Element OC nur ein optisches Leiterbündel bildet (gegebenenfalls unter Weglassung der äußeren Schutzhülle CS bzw. unter Einsatz nur einer Bewicklung oder Bespinnung anstelle von CS). Dabei können mehrere derartige Bündel zu einem Kabel verseilt werden, wobei dann außen um diese Bündel ein äußerer Kabelschutzmantel aufzubringen ist und die Zwickelräume ebenfalls mit Seelenfüllmasse FCS gefüllt sind.

Die bei der Füllmasse gemäß der Erfindung verwendeten Bestandteile werden nachfolgend im einzelnen näher beschrieben:

### Weichmacher

Bevorzugt werden Weichmacher verwendet, die bei 20 °C flüssig sind. Vorteilhaft werden PVC-Weichmacher verwendet. Es können auch unterschiedliche Weichmacher insbesondere unterschiedliche PVC-Weichmacher eingesetzt werden. Bevorzugt werden Weichmacher mit mindestens einem Säureester eingesetzt. Besonders zweckmäßig ist der Einsatz von Karbonsäureestern, insbesondere Mehrfachkarbonsäureestern aus aromatischen und/oder aliphatischen Mehrfachkarbonsäureestern oder deren Gemische. Es ist auch möglich, als Weichmacher Phthalsäureester, Trimellitsäureester, Polyster aus Adipin, Sebacin oder Azelain, Fettsäureester zu verwenden.

Es ist auch möglich, als Weichmacher Epoxidweichmacher vorzusehen. Der oder die Epoxid Weichmacher sollten zweckmäßig mindestens eine polare Gruppe im Molekül aufweisen, insbesondere in Form einer funktionellen Gruppe oder eines Heteroatoms. Besonders vorteilhaft ist es, als Weichmacher Carboxyl-Gruppen, Hydroxyl-Gruppen, Ester-Gruppierungen oder eine Ether-Gruppe zu verwenden. Als Heteroatome werden bevorzugt Stickstoff-, Phosphor oder Halogenatome verwendet. Die polaren Moleküle der Weichmacher sind zweckmäßig stärker polar als die einer reinen Kohlenwasserstoffverbindung bzw. als reine Polyolefine.

Die Weichmacher werden bevorzugt so ausgewählt, daß sie die Materialien der verwendeten Schutzhüllen SH in Fig. 1 und/oder SH1 - SH3 sowie CS in Figur 2 nicht anlösen oder beeinflussen. Sind beispielsweise die Schutzhüllen aus Polyolefinen, wie z.B. Polypropylen, Polyethylen, Polymethylpenten usw. aufgebaut, dann kommen als Weichmacher zweckmäßigerweise solche in Betracht, die polarer sind als die genannten Schutzhüllen (d.h. alle Weichmacher, die oben genannt sind).

Der Anteil an Weichmacher(n) an der gesamten Füllmasse sollte zwischen 99 Gew.% und 92 Gew.%, gewählt werden

### Zusatzstoff

Als Zusatzstoff (es können gegebenenfalls auch mehrere unterschiedliche Zusatzstoffe verwendet werden) sind besonders diejenigen Stoffe geeignet, für den der jeweilige Weichmacher auch sonst (d.h. bei den üblichen Anwendungsfällen von Weichmachern in der Chemie) eingesetzt werden. Beispielsweise wird bevorzugt ein PVC-Weichmacher zusammen mit einem aus PVC bestehenden Zusatzstoff eingesetzt. Werden als Weichmacher Epoxidweichmacher vorgesehen, wird als Zusatzstoff ein durch Epoxidweichmacher anlösbarer und/oder lösbarer Stoff eingesetzt, insbesondere z.B. Epoxide.

Besonders geeignet als Zusatzstoffe sind alle polaren Feststoffe um angelöste Gele der gewünschten Art herzustellen.

Der Vorteil derartiger Gele besteht vor allem darin, daß sich polare Festsubstanzen wie z.B. PVC in den PVC-Weichmachern extrem schnell lösen und somit auch ideal verteilt vorliegen. Es ist für einen gleichmäßigen und homogenen Aufbau der Füllmasse von besonderer Bedeutung. Das Verfahren Gele oder Füllmassen dieser Art herzustellen ist denkbar einfach und erfordert keine besondere Verfahrenstechnik. Bevorzugt wird der Zusatzstoff heiß (im Temperaturbereich zwischen 100°C und 160°C) in den Weichmacher eingerührt und erfährt dann dort innerhalb von kürzester Zeit (zwischen 60 s und 600 s das gewünschte Anlösen und/oder Lösen bzw. die gewünschte Wechselwirkung.)

Relativ geringe Anteile von Zusatzstoffen reichen aus, um eine gewünschte gelartige Füllmasse zu erhalten. Der Anteil der Zusatzstoffe an der gesamten Füllmasse wird insbesondere weniger als 8 Gew.% der Füllmasse gewählt.

Als Mindestanteil sind zweckmäßig 1 bis 3 Gew.% der Füllmasse vorteilhaft als Zusatzstoff vorhanden.

Beim vollständigen Auflösen des/der Zusatzstoffe werden die Pulverkörnchen in eine Lösung übergeführt. Dagegen werden beim Aufquellen/Anquellen des/der Zusatzstoffe die Pulverkörnchen nur zum Quellen gebracht und vergrößern ihr Volumen. So kann es bei PVC zum vollständigen Auflösen und bei PS/PC/PBT usw. zu einem Quellen der Partikel kommen.

Der/die Zusatzstoffe wirken ähnlich wie die sonst bei Füllmassen üblichen Verdickungs- bzw. Thixotropierungsmittel, so daß auf solche weiteren Zusätze bei der erfindungsgemäßen Füllmasse im allgemeinen meist verzichtet werden kann.

### Ergänzungsstoffe:

Neben den bereits erwähnten und das Verhalten der Füllmasse weitgehend prägenden Anteilen an Weichmachern und mit diesen in Wechselwirkung in Form von Auf- oder Anlösen tretenden Zusatzstoffen können weitere Ergänzungsstoffe eingesetzt werden, je nach dem gewünschten Anwendungsfall:
a) Kügelchen, insbesondere Hohlkügelchen.
   Der Einsatz derartiger insbesondere unter dem Handelsnamen "Expancell" der Firma Nobel Industries verwendet werden. Der Außendurchmesser (Teilchengröße) dieser Kügelchen sollte zweckmäßig deutlich unter dem Durchmesser der Lichtwellenleiter also unter 100 µm liegen. Bevorzugt werden Kügelchen verwendet, deren Durchmesser kleiner als 50 µm, insbesondere unter 10 µm liegt.
   Der Anteil der Kügelchen an der gesamten Füllmasse sollte zweckmäßig zwischen 1 Gew.% und 4 Gew.%, insbesondere zwischen 2 Gew.% und 3 Gew.%, gewählt werden.
   Als leicht in allen genannten flüssigen Weichmachern lösliche polare Feststoffe sind besonders geeignet PVC, Methylcellulose, Cellulosederivate, Celluloseacetat, Cellulosepropionat, PC, ABS, PBT und Epoxide.

Die letztgenannten Stoffe PC, ABS, PBT und Epoxide sind polare Feststoffe, die sich in den genannten Weichmachern lösen bzw. aufquellen.

Die nachfolgenden Beispiele geben Rezepturen wieder, die den an Füllmassen für optische Kabel oder optische Hohladern zu stellenden Anforderungen genügen:

### 1. Beispiel:

In 96 Gew% Palamoll 652 (Fa. BASF) als Weichmacher und 1 % Stabilisator Irganox 1010 (Ciba Additive, Frankfurt) dient als Stabilisierung von PVC bzw. als Antioxidant werden unter Rühren bei 140°C 3% Vinnol E G 70 (Fa. Vinnolit Kunststoff/Ismaning) als Zusatzstoff eingebracht.

Nach dem Erkalten der homogenen Flüssigkeit entsteht ein Gel mit folgenden Eigenschaften:
Konuspenetration bei -40°C: 200 1/10 mm
Viskosität bei 20°C: 15.000 mPa ^{.} s
Gefrierpunkt: < - 30°C

Das Gel wurde in 30 cm lange Hohladerröhrchen (vgl. Fig. 1) gefüllt und bei verschiedenen Temperaturen im Umlufttrockenschrank senkrecht gelagert.
Der Tropfpunkt der Masse liegt bei > 80°C

### 2. Beispiel

In 95 Gew% Palamoll 652 (Fa. BASF) als Weichmacher und 1 % Stabilisator Irganox 1010 als Antioxidant werden unter Rühren bei 140°C 4% Vinnol EG 70 als Zusatzstoff eingebracht. Nach dem Erkalten der homogenen Flüssigkeit entsteht ein Gel mit folgenden Eigenschaften:
Konuspenetration bei - 40°C: 183 1/10 mm
Viskosität bei 20°C:26.000 mPa ^{.} s
Gefrierpunkt:< - 30°C

Das Gel wurde in 30 cm Hohladerröhrchen gefüllt und bei verschiedenen Temperaturen im Umlufttrockenschrank senkrecht gelagert.
Der Tropfpunkt der Masse liegt bei > 80°C

### 3. Beispiel

In 95 Gew% Palatinol AH (Fa.BASF) als Weichmacher und 1 % Stabilisator Irganox 1010 (Fa. Ciba Additive/Frankfurt) als Stabilisator für PVC werden unter Rühren bei 140°C 4% Vinnol EG70 (Fa. Vinnolit Kunststoff/Ismaning) als Zusatzstoff eingebracht.

Nach dem Erkalten der homogenen Flüssigkeit entsteht ein Gel mit folgenden Eigenschaften:
Konuspenetration bei - 40°C: 264 1/10 mm
Viskosität bei 20°C: 8.000 mPa s
Gefrierpunkt:<-45°C

Das Gel wurde in 30 cm Hohladerröhrchen gefüllt und bei verschiedenen Temperaturen im Umlufttrockenschrank senkrecht gelagert.
Der Tropfpunkt der Masse liegt bei > 80°C

### 4. Beispiel

In 96 Gew% Palatinol AH (Fa. BASF) als Weichmacher und 1 % Stabilisator Irganox 1010 (Fa. Ciba Additive/Frankfurt) als Stabilisator für PVC werden unter Rühren bei 140°C 3 % Vinnol EG70 (Fa. Vinnolit Kunststoff/Ismaning) als Zusatzstoff eingebracht.

Nach dem Erkalten der homogenen Flüssigkeit entsteht ein Gel mit folgenden Eigenschaften:
Konuspenetration bei -40°C: 350 1/10 mm
Viskosität bei 20°C: 5.000 mPa ^{.} s
Gefrierpunkt: < -45 °C

Das Gel wurde in 30 cm Hohladerröhrchen gefüllt und bei verschiedenen Temperaturen im Umlufttrockenschrank senkrecht gelagert.
Der Tropfpunkt der Masse liegt bei > 80°C

### 5. Beispiel

In 95 Gew% Palatinol 11 (Fa. BASF) als Weichmacher und 1 % Stabilisator Iragnox 1010 (Fa. Ciba Additive/Frankfurt) als Stabilisator für PVC werden unter Rühren bei 140°C 4 % Vinnol E G 70 (Fa. Vinnolit Kunststoff/Ismaning) als Zusatzstoff eingebracht.
Nach dem Erkalten der homogenen Flüssigkeit entsteht ein Gel mit folgenden Eigenschaften:
Konuspenetration bei - 40°C: 140 1/10 mm
Viskosität bei 20°C: 6.000 mPa ^{.} s
Gefrierpunkt: < -40°C

Das Gel wurde in 30 cm Hohladerröhrchen gefüllt und bei verschiedenen Temperaturen im Umlufttrockenschrank senkrecht gelagert.
Der Tropfpunkt der Masse liegt bei > 80°C.

### 6. Beispiel

In 96 Gew.% Palatinol AM (Fa. BASF) als Weichmacher und 1 % Stabilisator Irganox 1010 (Fa. Ciba) als PVC-Stabilisator werden unter Rühren bei 120°C 2 Gew.% Vinnol EG 70 (Fa. Vinnolit Kunststoff) als Zusatzstoff und 2 Gew.% Expancell (Fa. Nobel Industries) als Hohlkügelchen eingebracht.

Nach dem Erkalten entsteht ein heterogenes Gel mit folgenden Eigenschaften:
Konuspenetration bei - 40°C: 300 1/10 mm
Viskosität bei 20°C: 17.000 mPa ^{.} s
Gefrierpunkt: < -45°C

Die Aufbereitung der erfindungsgemäßen Füllmasse und deren Einsatz im Bereich der Kabelfertigung wird anhand von Figur 3 näher erläutert. Dabei ist zunächst vorausgesetzt, daß ein optisches Übertragungselement im Sinne der Figur 1, d.h. insbesondere eine optische Hohlader hergestellt werden soll. Der oder die Lichtwellenleiter LW sind auf Vorratsspulen VS untergebracht und laufen in einen Extruder EX ein. Dieser Extruder EX dient der Aufbringung der äußeren Schutzhülle SH, so daß an seinem Ausgang ein fertiges optisches Übertragungselement z.B. in Form einer Hohlader GA vorliegt.

Die Aufbereitung der Füllmasse erfolgt zweckmäßig vor Ort, d.h. unmittelbar im Bereich des Extruders EX und "online", d.h. in einem durchlaufenden Fertigungsprozeß. In einem ersten Vorratsbehälter BT1 ist der vorzugsweise pulverförmige Zusatzstoff FCP untergebracht, während in einem zweiten Vorratsbehälter BT2 die fertig aufbereitete Grundfüllmasse FCW enthalten ist, also insbesondere der flüssige Weichmacher sowie gegebenenfalls Hohlkügelchen. Die Grundfüllmasse enthält also alle Bestandteile der fertigen Füllmasse ausgenommen lediglich den für das Anlösen/Lösen benötigten Zusatzstoff. Die Grundfüllmasse FCW wird zusammen mit dem Zusatzstoff FCP einer Mischeinrichtung MX zugeführt, wo es zu einer innigen Vermengung der bevorzugt pulverförmigen Bestandteile des Zusatzstoffes FCP und der übrigen, bevorzugt flüssigen, Bestandteile der Grundfüllmasse FCW kommt. Bereits beim Mischprozeß setzt die Wechselwirkung (Anweichen bzw. Lösen) zwischen dem flüssigen Weichmacher der Grundfüllmasse FCW einerseits und dem oder den Zusatzstoffen FCP andererseits ein, was insbesondere dadurch gefördert wird, daß mit einer höheren Temperatur z.B. zwischen 100°C und 160°C im Bereich des Mischers MX gearbeitet wird. Die so erhaltene fertige Füllmasse FC wird über eine entsprechende Leitung in den Extruderkopf des Extruders EX eingeführt und dort, bevorzugt im Bereich des Reckkegels für die Schutzhülle SH in das Innere dieses Reckkegels eingeleitet. Dadurch ist sichergestellt, daß es zu einer allseitigen und vollständigen Füllung des Innenraums der Schutzhülle SH nach Figur 1 kommt.

Wenn mit der Anlage nach Figur 3 ein Kabel entsprechend Figur 2 hergestellt werden soll, dann laufen von der/den Vorratsspulen VS ein oder mehrere Bündel ab, die in das Innere des Extruders EX geführt werden, wo der Außenmantel CS des fertigen Kabels OC1 aufgebracht wird.

## Patentansprüche

1. Optisches Übertragungselement (GA, OC), welches mindestens einen Lichtwellenleiter (LW) und eine mindestens einen Weichmacher enthaltende Füllmasse (FC, FCS) aufweist,
**dadurch gekennzeichnet,**
daß der Anteil des Weichmachers an der Füllmasse (FC, FCS) zwischen 99 Gew.% und 92 Gew.% beträgt und
daß der Füllmasse (FC, FCS) mindestens ein Zusatzstoff beigefügt ist, welcher vom Weichmacher angelöst und/oder gelöst wird.

2. Optisches Übertragungselement (GA, OC) nach Anspruch 1,
**dadurch gekennzeichnet,**
daß als Weichmacher ein PVC-Weichmacher verwendet ist.

3. Optisches Übertragungselement (GA, OC) nach einem der vorhergehenden Ansprüche,
**dadurch gekennzeichnet,**
daß als Weichmacher mindestens ein Carbonsäureester verwendet ist.

4. Optisches Übertragungselement (GA, OC) nach einem der vorhergehenden Ansprüche,
**dadurch gekennzeichnet,**
daß ein PVC-Weichmacher verwendet ist und daß als Zusatzstoff PVC verwendet ist.

5. Optisches Übertragungselement (GA, OC) nach einem der vorhergehenden Ansprüche,
**dadurch gekennzeichnet,**
daß der Zusatzstoff der Füllmasse in Form eines Pulvers beigemischt ist.

6. Optisches Übertragungselement (GA, OC) nach Anspruch 5,
**dadurch gekennzeichnet,**
daß die Teilchengröße des Zusatzstoffes zwischen 1 µm und 100 µm, insbesondere zwischen 10 µm und 50 µm liegt.

7. Optisches Übertragungselement (GA, OC) nach einem der vorhergehenden Ansprüche,
**dadurch gekennzeichnet,**
daß der Anteil des Zusatzstoffes an der Füllmasse (FC, FCS) mindestens 1 Gew.% bis 3 Gew.% beträgt.

8. Optisches Übertragungselement (GA, OC) nach einem der vorhergehenden Ansprüche,
**dadurch gekennzeichnet,**
daß als Zusatzstoffe solche Stoffe verwendet sind, die mindestens eine polare Gruppe aufweisen.

9. Optisches Übertragungselement (GA, OC) nach einem der vorhergehenden Ansprüche,
**dadurch gekennzeichnet,**
daß als Zusatzstoff Methylcellulose, Cellulosederivate, Celluloseacetat, Cellulosepropionat, PC, ABS, PBT, Epoxide verwendet sind.

10. Verfahren zur Herstellung eines optischen Übertragungselementes (GA, OC) nach einem der vorhergehenden Ansprüche,
bei dem
eine Grundfüllmasse (FC) im Bereich der Fertigung des optischen Übertragungselementes (GA, OC) mit dem Zusatzstoff zusammengebracht wird und die so erhaltene fertige Füllmasse in einem durchgehenden Prozeß in das jeweilige optische Übertragungselement (GA, OC) eingefüllt wird.

## Claims

1. Optical transmission element (GA, OC) which has at least one optical waveguide (LW) and a filling composition (FC, FCS) containing at least one plasticizer, characterized in that the content of plasticizer in the filling composition (FC, FCS) is between 99% by weight and 92% by weight and in that at least one additive which is incipiently and/or fully dissolved by the plasticizer is added to the filling composition (FC, FCS).

2. Optical transmission element (GA, OC) according to Claim 1, characterized in that a PVC plasticizer is used as the plasticizer.

3. Optical transmission element (GA, OC) according to one of the preceding claims, characterized in that at least one carboxylic acid ester is used as the plasticizer.

4. Optical transmission element (GA, OC) according to one of the preceding claims, characterized in that a PVC plasticizer is used and in that PVC is used as the additive.

5. Optical transmission element (GA, OC) according to one of the preceding claims, characterized in that the additive is admixed to the filling composition in the form of a powder.

6. Optical transmission element (GA, OC) according to Claim 5, characterized in that the particle size of the additive is between 1 µm and 100 µm, in particular between 10 µm and 50 µm.

7. Optical transmission element (GA, OC) according to one of the preceding claims, characterized in that the content of the additive in the filling composition (FC, FCS) is at least 1% by weight to 3% by weight.

8. Optical transmission element (GA, OC) according to one of the preceding claims, characterized in that those substances which contain at least one polar group are used as additives.

9. Optical transmission element (GA, OC) according to one of the preceding claims, characterized in that methylcellulose, cellulose derivatives, cellulose acetate, cellulose propionate, PC, ABS, PBT and epoxides are used as the additive.

10. Process for the preparation of an optical transmission element (GA, OC) according to one of the preceding claims, in which a base filling composition (FC) is brought together with the additive in the production area of the optical transmission element (GA, OC) and the finished filling composition thus obtained is introduced into the particular optical transmission element (GA, OC) in a continuous process.

## Revendications

1. Elément de transmission optique (GA, OC), qui comporte au moins un guide d'ondes lumineuses (LW) et une composition de remplissage contenant un plastifiant (FC, FCS), caractérisé en ce que la proportion du plastifiant par rapport à la composition de remplissage (FC, FCS) est comprise entre 99 % en poids et 92 % en poids, et en ce qu'il est ajouté à la composition de remplissage (FC, FCS) un additif qui est gonflée et/ou dissous par le plastifiant.

2. Elément de transmission optique (GA, OC) selon la revendication 1,
caractérisé en ce
qu'il est utilisé comme plastifiant un plastifiant pour PVC.

3. Elément de transmission optique (GA, OC) selon l'une des revendications précédentes,
caractérisé en ce
qu'il est utilisé comme plastifiant au moins un ester d'acide carboxylique.

4. Elément de transmission optique (GA, OC) selon l'une des revendications précédentes,
caractérisé en ce
qu'il est utilisé un plastifiant pour PVC et en ce que du PVC est utilisé comme additif.

5. Elément de transmission optique (GA, OC) selon l'une des revendications précédentes,
caractérisé en ce
que l'additif est mélangé sous la forme d'une poudre à la composition de remplissage.

6. Elément de transmission optique (GA, OC) selon la revendication 1,
caractérisé en ce que
la taille de particules de l'additif est comprise entre 1 micromètre et 100 micromètres, en particulier entre 10 micromètres et 50 micromètres.

7. Elément de transmission optique (GA, OC) selon l'une des revendications précédentes,
caractérisé en ce que
la proportion de l'additif par rapport à la composition de remplissage (FC, FCS) est d'au moins 1 % en poids à 3 % en poids.

8. Elément de transmission optique (GA, OC) selon l'une des revendications précédentes,
caractérisé en ce
qu'il est utilisé comme additifs des substances qui présentent au moins un groupe polaire.

9. Elément de transmission optique (GA, OC) selon l'une des revendications précédentes,
caractérisé en ce
qu'il est utilisé comme additif de la méthylcellulose des dérivés de la cellulose, de l'acétate de cellulose, du propionate de cellulose, du PC, de l'ABS, du PBT, des époxydes.

10. Procédé de préparation d'un élément de transmission optique (GA, OC) selon l'une des revendications précédentes, dans lequel une composition de remplissage de base (FC) est mise en contact, dans la zone de la fabrication de l'élément de transmission optique (GA, OC), avec l'additif et en ce que la composition de remplissage terminée obtenue est introduite par un procédé continu dans l'élément de transmission optique (GA, OC) respectif.
